# EUROPEAN PATENT APPLICATION

(11) **EP 4 564 742 A1**
(43) Date of publication of application: **04.06.2025**
(21) Application number: 23213853.7
(22) Date of filing: 03.12.2023
(51) Int. Cl.: H04L 9/40, H04W 12/069, H04W 12/71, B60L 53/68, B60L 53/31, B60L 53/30, H04W 84/12

(54) **METHOD AND SYSTEM FOR SET-UP AND INSTALLATION OF AN ELECTRIC VEHICLE CHARGING EQUIPMENT**

(71) Applicant: HeyCharge GmbH, 80333 München (DE)
(72) Inventor: CARDE, Christopher, 80469 München (DE)
(74) Representative: DTS Patent- und Rechtsanwälte PartmbB

(57) **Abstract**

The present invention provides a method for set-up and installation of an electric vehicle (EV) charging equipment (20) including: defining identification information for the EV charging equipment (20); defining configuration information for the EV charging equipment (20); defining a public key for a back-end system (10); uploading the defined identification information and configuration information for the EV charging equipment (20) to the EV charging equipment (20); uploading the defined identification information and configuration information for the EV charging equipment (20) to the back-end system (10) prior to installation of the EV charging equipment (20); installing the EV charging equipment (20) on site; connecting the EV charging equipment (20) to the back-end system (10) through a network, and performing a set-up step of the EV charging equipment (20) comprising delivering set-up information for the EV charging equipment (20) including the public key of the back-end system (10) from the back-end system (10) to the EV charging equipment (20) through and installation channel, which is at least temporarily established between the EV charging equipment (20) and the back-end system (10). The present invention further provides a system (100) which is configured and adapted to implement the above-mentioned method steps.

## Description

The present invention belongs to the technical field of electric vehicle (EV) charging.

EV charging stations, also known as EV chargers or electric vehicle supply equipment (EVSE) are designed to supply electric power for charging plug-in electric vehicles.

EV charging stations may be located either in private or public areas.

In particular, the invention relates to method for set-up and installation of an electric vehicle (EV) charging equipment.

The EV charging equipment can include, for instance, one or more electric vehicle supply equipment (EVSE).

For instance, an EVSE (also referred to as "wallbox") can be a module that is applied to or comprised into a wall or the like for the purpose of supplying electric power to an electric vehicle to be charged.

In the last developments, EVSEs may be connected to a back-end, e.g., for user access control management and energy consumption billing (so called "smart" EVSEs).

In the state of the art, on-site installation and set-up of an EVSE usually requires the implementation of complex steps, this resulting in a time-consuming process that requires the intervention of specialized technicians.

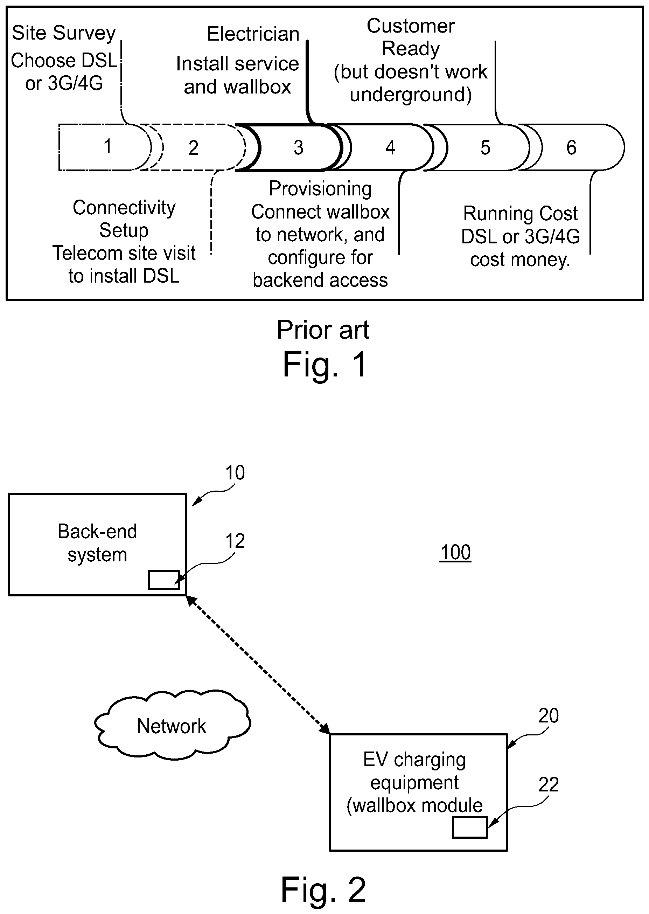

An example of on-site installation and set-up method for a "smart" EVSE according to the state of the art is schematically shown in **Fig. 1****.**

In the state of the art, "smart" EVSEs are delivered by the manufacturer to the user in an unconfigured state.

Accordingly, the intervention of specialized technicians is necessary in order to configure the EVSE(s) onto an available network (or similar connectivity channel) and set-up the EVSE(s) for connection to a back-end system (e.g., a back-end management platform).

To this end, it is necessary to define identifying information for the EVSE(s) (e.g., an identifier and a secret key or password, certificates, public/private key pairs or the like), and configure the back-end system for connection to the EVSE(s).

In the state of the art, set-up of "smart" EVSEs can be based on the following standards and protocols:

### Connectivity:

2G/3G/4G/5G standards;
Wi-Fi connection;
Ethernet connection.

### Application protocol:

Open Charge Point Protocol (OCPP) (presently, 1.6 referenced, also available in versions 1.5, 2.0, 2.0.1 or the like);
Proprietary, manufacturer-specific application protocols.

Thus, there is the need for an improved solution that allows simplifying set-up and on-site installation of an EV charging equipment, e.g. including one or more EVSEs, thereby reducing the overall costs without prejudice to functionalities, especially "smart" functionalities, of the EV charging equipment.

It is therefore an object of the present invention to provide a method and a system that allow for simplified and cost-effective set-up and on-site installation of an EV charging equipment (e.g., one or more EVSEs) without prejudice its functionalities, in particular its "smart" functionalities.

This object is achieved by the provision of a method according to claim 1.

The present invention provides a method for set-up and installation of an electric vehicle (EV) charging equipment.

In particular, the EV charging equipment may include one or more EVSEs configured and adapted to implement "smart" functionalities such as user access control management and energy consumption billing.

The method includes the step of defining identification information for the EV charging equipment.

In particular, the identification information for the EV charging equipment may include a serial number of the EV charging equipment.

The method further includes the step of defining configuration information for the EV charging equipment.

Also, the method includes the step of defining a public key pair for a back-end system.

The method further includes the step of uploading the defined identification information and configuration information for the EV charging equipment to the EV charging equipment.

The method further includes the step of uploading the defined identification information and configuration information for the EV charging equipment to the back-end system.

This step can be performed at any time between manufacturing of the EV charging equipment and its on-site installation.

The method further includes the step of installing the EV charging equipment on site.

The EV charging equipment may be installed on either a private or public area.

The method further includes the step of connecting the EV charging equipment to the back- end system through a network.

The method further includes performing a set-up step of the EV charging equipment comprising delivering set-up information for the EV charging equipment including the public key of the back-end system from the back-end system to the EV charging equipment through an installation channel.

The installation channel is at least temporarily established between the EV charging equipment and the back-end system.

Since the set-up information for the EV charging equipment includes the public key of the back- end system, only messages that are signed with the private key of the back-end system may be accepted by the EV charging equipment. Also, since the identification information and configuration information for the EV charging equipment are defined and uploaded to both the EV charging equipment and the back-end system at an earlier stage, no further set-up operations for the EV charging equipment is necessary after on-site installation.

To the contrary, it is sufficient to connect the EV charging equipment to an electric source such as the electric network, and establish connection to the back-end system.

Accordingly, time-consuming operations requiring the intervention of specialized staff can be prevented.

The invention is based on the basic idea that, by defining identification information and configuration information for the EV charging equipment and uploading the defined identification information and configuration information on both the EV charging equipment and the back-end system prior to installation, it is possible to set-up and install the EV charging equipment in a simplified and cost-effective manner without prejudice to its functionalities, in particular its "smart" functionalities.

The "smart" functionalities of the EV charging equipment may include user access control management and energy consumption billing.

Advantageously, the installation channel may be defined by an installation application running on a user's mobile device, e.g. a smartphone, tablet computer or the like.

In particular, the configuration information for the EV charging equipment 20 may include one or more among:
a public/private key pair for the EV charging equipment;
a public key of cloud storage means;
name of the EV charging equipment;
one or more configuration options for the EV charging equipment;
load management set-up for the EV charging equipment, and/or
one or more security features for the EV charging equipment.

Alternatively, the configuration information for the EV charging equipment may include one or more among:
local network configuration parameters;
one or more access parameters;
a cloud management platform network address;
one or more certificates for the EV charging equipment, and/or
one or more OCPP parameters for the EV charging equipment.

Advantageously, the set-up step of the EV charging equipment can be enabled through recording of the public key of the back-end system and identification information, in particular a serial number, of the EV charging equipment.

Accordingly, it is possible to identify the serial number of the EV charging equipment and thereby find the correct public key in the back-end system for encrypting/signing a message containing configuration information for the EV charging equipment.

The public key for the back-end system 10 may be defined according to X.509 certificate.

X.509 is an International Telecommunication Union (ITU) standard defining the format of public key certificates.

In particular, an X.509 certificate binds an identity to a public key using a digital signature.

The defined identification information and configuration information may be recorded in a manufacturing log file for the EV charging equipment.

This is usually performed during manufacturing of the EV charging equipment.

Alternatively, pre-configured identification information and configuration information for the EV charging equipment may be set in an embeddable hardware means.

Then, the embeddable hardware means is installed into the EV charging equipment.

The pre-configured identification information and configuration information are usually made available by the manufacturer at the time in which the embeddable hardware means is sourced or delivered.

Connection between the EV charging equipment, e.g. one or more EVSEs, and the back-end system can be temporarily established.

In particular, the connection between the EV charging equipment and the back-end system can be established via a temporary internet connection.

Alternatively, the connection between the EV charging equipment and the back-end system can be established via a stationary internet connection.

The connection between the EV charging equipment and the back-end system may be established through Wi-Fi connection.

In such a case, the EV charging equipment connects to an open network or a preconfigured Wi-Fi Service Set Identifier (SSID) using a stored network name and password provided at the time of manufacturing, and acquires an Internet Protocol (IP) address through a Dynamic Host Configuration Protocol (DHCP).

Then, connection to the back-end system is established by using a preconfigured back-end address.

Finally, an authentication step is performed through the defined identification information and configuration information for the EV charging equipment.

Alternatively, the connection between the EV charging equipment and the back-end system may be established through Ethernet-based connection.

Also in this case, an IP address is acquired through a DHCP.

The connection and authentication steps in case of Ethernet-based connection are the same as specified above.

Alternatively, the connection between the EV charging equipment and the back-end system may be based on 3G/4G/5G standards.

In such a case, the EV charging equipment connects to the network using preconfigured Access Point Name (APN) settings using pre-programmed data and/or data provided in a SIM module of the EV charging equipment.

The method may further include the step of defining network-level access data for the EV charging equipment.

In particular, the network-level access data may include a Wi-Fi network name.

Additionally or alternatively, the network-level access data may include a Wi-Fi network password.

Additionally or alternatively, the network-level access data may include APN settings.

The present invention further provides a system for implementing the method described above.

The system includes at least one back-end system.

The system further includes an EV charging equipment.

The EV charging equipment is configured and adapted to be operatively connected to the back-end system through a network.

The EV charging equipment is characterized by predefined identification information and configuration information.

The identification information for the EV charging equipment may include a serial number of the EV charging equipment.

Also, the back-end system is characterized by predefined public key pair.

The public key of the back-end system may be defined according to X.509 certificate. The back-end system includes a storage means for storing the defined identification information and configuration information for the EV charging equipment.

Set-up information for the EV charging equipment including the public key of the back-end system is delivered from the back-end system to the EV charging equipment through an installation channel.

The installation channel is at least temporarily established between the EV charging equipment and the back-end system. As mentioned, since the set-up information for the EV charging equipment includes the public key of the back-end system, only messages that are signed with the private key of the back-end system may be accepted by the EV charging equipment.

Advantageously, the installation channel is defined by an installation application running on a user's mobile device, such as a smartphone, a tablet computer or the like.

Preferably, the EV charging equipment includes one or more EVSEs.

Preferably, the one or more EVSEs are configured to implement "smart" functionalities such as user access control management and energy consumption billing.

The system may further include an embeddable hardware means where pre-configured identification information and configuration information for the EV charging equipment are set.

The embeddable hardware means is configured to be installed into the EV charging equipment.

The EV charging equipment includes a connection means for connection to the back-end system.

In particular, the connection means may be configured and adapted for Wi-Fi connection.

Alternatively, the connection means may be configured and adapted for Ethernet-based connection.

Alternatively, the connection means may be configured and adapted for connection based on 3G/4G/5G.

Further details and advantages of the present invention shall now be disclosed in connection with the drawings, where:
Fig. 1 is a diagram showing an example of a method for on-site installation and set-up of an EV charging equipment, e.g. including a "smart" EVSE, according to the prior art;
Fig. 2 is a block diagram showing a system for set-up and installation of an EV charging equipment, e.g. including a "smart" EVSE, according to the invention;
Fig. 3 is a block diagram schematically showing the steps of manufacturing, preparing and configuring an EV charging equipment according to the invention.

Fig. 2 provides a schematic overview of a system 100 that is configured and adapted to implement the method steps described below.

The system 100 includes a back-end system 10.

The system 100 further includes an EV charging equipment 20.

In the present embodiment, the EV charging equipment 20 includes an EVSE for EV charging having "smart" functionalities such as user access control management and energy consumption billing.

The EV charging equipment 20 is configured and adapted to be operatively connected to the back-end system 10 through a network.

The EV charging equipment 20 is characterized by predefined identification information and configuration information. In the present embodiment, said identification information includes a serial number of the EV charging equipment 20.

On the other hand, said configuration information may include one or more among:
a public/private key pair for the EV charging equipment 20;
a public key of cloud storage means;
name of the EV charging equipment 20;
one or more configuration options for the EV charging equipment 20;
load management set-up for the EV charging equipment 20, and/or
one or more security features for the EV charging equipment 20.

Alternatively, said configuration information may include one or more among:
local network configuration parameters;
one or more access parameters;
a cloud management platform network address;
one or more certificates for the EV charging equipment 20, and/or
one or more OCPP parameters for the EV charging equipment 20.

The defined identification information and configuration information for the EV charging equipment 20 may be recorded in a manufacturing log file for the EV charging equipment 20 during manufacturing.

Alternatively, the system 100 may be further implemented with an embeddable hardware means where pre-configured identification information and configuration information for the EV charging equipment 20 are set.

The embeddable hardware means is configured and adapted to be installed into the EV charging equipment 20.

The back-end system 10 is characterized by a predefined public key.

In the present embodiment, the back-end system 10 includes storage means 12 for storing the defined identification information and configuration information for the EV charging equipment 20.

Set-up information for the EV charging equipment 20, including the public key of the back-end system 10, is delivered from the back-end system 10 to the EV charging equipment 20 through an installation channel.

The installation channel is at least temporarily established between the EV charging equipment 20 and the back-end system 10.

In the present embodiment, the installation channel is defined by an installation application running on a user's mobile device, e.g. a smartphone, a table computer or the like.

In the present embodiment, set-up of the EV charging equipment 20 is enabled through recording of the public key of the back-end system 10 and identification information, in particular a serial number, of the EV charging equipment 20.

Connection between the EV charging equipment 20, e.g. including an EVSE, and the back- end system 10 can be temporarily established.

In particular, the connection between the EV charging equipment 20 and the back-end system 10 can be established via a temporary internet connection.

Alternatively, the connection between the EV charging equipment 20 and the back-end system 10 can be via a stationary internet connection.

In the present embodiment, the EV charging equipment 20 includes a connection means 22 for connection to the back-end system 10.

In particular, the connection means 22 may be configured and adapted for Wi-Fi connection.

Alternatively, the connection means 22 may be configured and adapted for Ethernet-based connection.

Alternatively, the connection means 22 may be configured and adapted for connection based on 3G/4G/5G standards.

In one embodiment, the public key for the back-end system 10 may be is defined according to X.509 certificate.

A method for set-up and installation of an EV charging equipment according to the invention is described in the following.

In the present embodiment, the EV charging equipment 20 includes an EVSE for EV charging having "smart" functionalities such as user access control management and energy consumption billing.

In the present embodiment, the method includes the following steps of:
defining identification information for the EV charging equipment 20;
defining configuration information for the EV charging equipment 20;
defining a public key for a back-end system 10;
uploading the defined identification information and configuration information for the EV charging equipment 20 to the EV charging equipment 20,
uploading the defined identification information and configuration information for the EV charging equipment 20 to the back-end system 10 prior to installation of the EV charging equipment 20;
installing the EV charging equipment 20 on site;
connecting the EV charging equipment 20 to the back-end system 10 through a network, and
performing a set-up step of the EV charging equipment 20 comprising delivering set-up information for the EV charging equipment 20 including the public key of the back- end system 10 from the back-end system 10 to the EV charging equipment 20 through an installation channel.

The installation channel is at least temporarily established between the EV charging equipment 20 and the back-end system 10.

In the present embodiment, the installation channel is defined by an installation application running on a user's mobile device, such as a smartphone, a tablet computer or the like.

In the present embodiment, the set-up step of the EV charging equipment 20 is enabled through recording of the public key of the back-end system 10 and identification information, in particular a serial number, of the EV charging equipment 20.

In the present embodiment, the identification information for the EV charging equipment 20 includes a serial number of the EV charging equipment 20.

On the other hand, the configuration information for the EV charging equipment 20 may include one or more among:
a public/private key pair for the EV charging equipment 20;
a public key of cloud storage means;
name of the EV charging equipment 20;
one or more configuration options for the EV charging equipment 20;
load management set-up for the EV charging equipment 20, and/or
one or more security features for the EV charging equipment 20.

Alternatively, the configuration information for the EV charging equipment 20 may include one or more among:
local network configuration parameters;
one or more access parameters;
a cloud management platform network address;
one or more certificates for the EV charging equipment 20, and/or
one or more OCPP parameters for the EV charging equipment 20.

Optionally, the public key for the back-end system 10 may be defined according to X.509 certificate.

The identification information and configuration information for the EV charging equipment 20 may be recorded in a manufacturing log file for the EV charging equipment 20 during manufacturing.

Alternatively, the method may include providing an embeddable hardware means into which pre-configured identification information and configuration information for the EV charging equipment 20 are set.

The embeddable hardware means is then embedded into the EV charging equipment 20.

Connection between the EV charging equipment 20 and the back-end system 10 can be temporarily established.

In particular, the connection between the EV charging equipment 20 and the back-end system 10 can be established via temporary internet connection.

Alternatively, the connection between the EV charging equipment 20 and the back-end system 10 can be established via stationary internet connection.

Connection between the EV charging equipment 20 and the back-end system 10 may be established through Wi-Fi connection.

Alternatively, connection between the EV charging equipment 20 and the back-end system 10 may be established through Ethernet-based connection.

Alternatively, connection between the EV charging equipment 20 and the back-end system 10 may be established through connection based on 3G/4G/5G standards.

Optionally, the method may further include defining network-level access data for the EV charging equipment 20.

In particular, the network-level access data may include Wi-Fi network name.

Additionally or alternatively, the network-level access data may include Wi-Fi network password.

Additionally or alternatively, the network-level access data may include APN settings.

By defining identification information and configuration information for the EV charging equipment and uploading the defined identification information and configuration information on both the EV charging equipment and the back-end system prior to installation, no on-site set-up operation for the of the EV charging equipment is necessary.

To the contrary, once the EV charging equipment is installed on-site, it is sufficient to connect the EV charging equipment to the electric network and establish connection to the back-end system.

Accordingly, the EV charging equipment may be set-up and installed in a simplified and cost-effective manner, without prejudice to its functionalities, in particular "smart" functionalities.

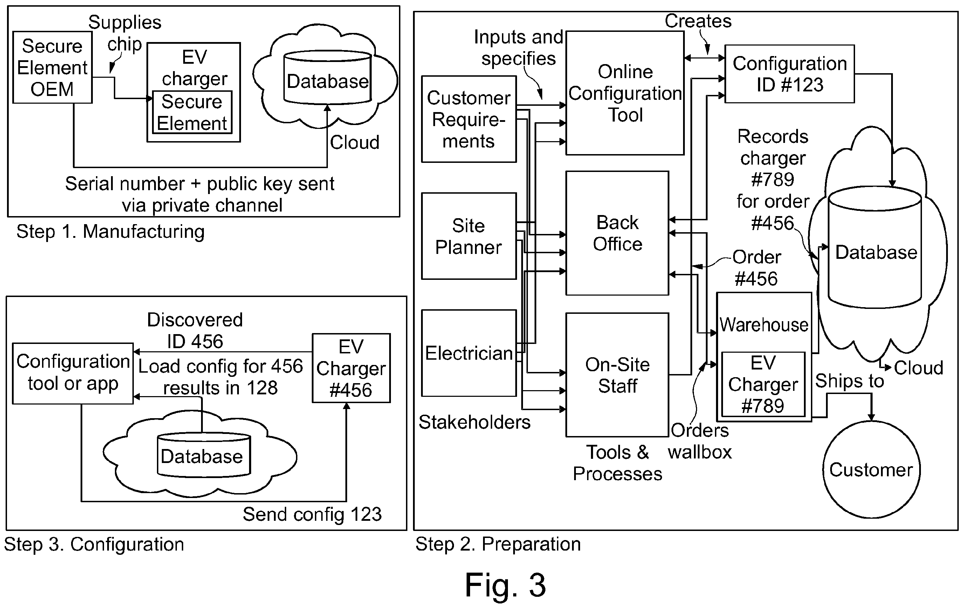

**Fig.** 3 provides a block diagram schematically showing exemplary steps of manufacturing, preparing and configuring an EV charging equipment according to the invention.

The EV charging equipment may include one or more EVSEs.

A pre-programmed serial number and a public/private key pair for the EV charging equipment is provided through a so-called Secure Element or Hardware Security Chip (e.g. an ATTECC608A/B microchip).

The EV charging equipment is provided with a file containing pairs of serial numbers and public keys that are further stored in a back-end system for later use.

A site set-up plan for the EV charging equipment is then generated, e.g. by either back office staff, direct customer input (e.g. an online configuration tool), or by implementing an on-site planning and configuration step.

The information to be configured varies depending on a specific EV charging equipment to be set up and/or available network and/or configuration of the back-end system server to be used by the EV charging equipment.

Advantageously, data to be configured can be relatively reduced, only comprising EV charging equipment name, public key for the back-end system, and configuration parameters for the EV charging equipment, e.g. including connector locking policy, maximum current or the like.

According to an alternative example, in particular where an OCPP is used, the configuration of the EV charging equipment may include the following steps:
defining network access information, such as IP configuration, Wi-Fi network access name and key, APN data for a 4G/5G SIM or the like;
defining OCPP backend configuration information required to use a network adapted to connect to an OCPP server (e.g., OCPP server base URL, server certificate, charge point identifier or the like), and
defining EV charger equipment configuration parameters such as display customization, connector locking policy, fail-safe charging, current limit, phase configuration or the like.

According to yet another example, an EV charging equipmentcan be provided with a default configuration and a provisioning back-end system.

Optionally, in this case, network-level access data (e.g. including Wi-Fi network name and password and/or APN settings) may be pre-programmed.

Also, the EV charging equipment may be set to automatically seek for an available network (e.g. by connecting to an open Wi-Fi network, connecting using DHCP to an attached ethernet network, or retrieving APN information from a SIM module inserted into the EV charging equipment).

Once installed, and after having been given physical access to a network medium, the EV charging equipment first establishes network level access to the internet according to one of the following options:
Ethernet, getting IP address via Dynamic Host Configuration Protocol (DHCP);
Wi-Fi, connecting to an open network (if available) or to a pre-configured Wi-Fi service set identifier (SSID), using stored network name and password and then getting an IP address via DHCP, or
2G/3G/4G/5G, connecting to a network using APN settings using pre-programmed data and/or data provided by a SIM module.

Then, connection between the EV charging equipment and the back-end system is established using stored access information (e.g. network address or hostname) and authentication information (e.g. username/password and/or certificates).

The EV charging equipment is characterized by a unique identifier (normally a serial number).

Once the back-end system recognizes the EV charging equipment through its unique identifier, the back-end system forwards a configuration data object to the EV charging equipment.

In particular, this example relies on an auto-configuration concept based on a known/preassigned mapping of configuration for the EV charging equipment. Accordingly, no on-site configuration is required, although at the expense of limiting the implementation to installation sites where it is convenient to employ either an unauthenticated network connection or a network connection that is authenticated though physical connection, e.g. an ethernet network with DHCP or a SIM module with APN information.

In a still further example, an EV charging equipment with capability of being automatically configured with centrally-configured parameters may be further provided with an add-on feature to specifically include data necessary for alternately forming and/or joining a wireless mesh network.

In a wireless mesh network, once operating, the EV charging equipment is enabled to form a robust, dynamic, and self-healing relay network, e.g. including a plurality of EVSEs having "smart" functionalities".

Here, necessary data to form the wireless mesh network (such as an installation code, as in the case where Zigbee^{®} technology is used for the mesh network) are pre-installed onto the EV charging equipment during manufacturing and, as a part of this process, also transmitted to a back-end system server.

Then, at the time of configuration of the EV charging equipment, the required keys are transmitted to the EV charging equipment being configured so that a mesh network (e.g. a Zigbee^{®}-based mesh network) can be formed on-site without any further action from an operator being required to this end.

### References

- 100: System
- 10: Back-end system
- 12: Storage means
- 20: EV Charging equipment, electric vehicle supply equipment (EVSE)
- 22: Connection means

## Claims

1. A method for set-up and installation of an electric vehicle (EV) charging equipment (20) including:
defining identification information for the EV charging equipment (20);
defining configuration information for the EV charging equipment (20);
defining a public key for a back-end system (10);
uploading the defined identification information and configuration information for the EV charging equipment (20) to the EV charging equipment (20);
uploading the defined identification information and configuration information for the EV charging equipment (20) to the back-end system (10) prior to installation of the EV charging equipment (20);
installing the EV charging equipment (20) on site;
connecting the EV charging equipment (20) to the back-end system (10) through a network, and
performing a set-up step of the EV charging equipment (20) comprising delivering set-up information for the EV charging equipment (20) including the public key of the back- end system (10) from the back-end system (10) to the EV charging equipment (20) through an installation channel, which is at least temporarily established between the EV charging equipment (20) and the back-end system (10).

2. The method according to claim 1,
**characterized in that**
the installation channel is defined by an installation application running on a user's mobile device.

3. The method according to claim 1 or 2,
**characterized in that**
the set-up step of the EV charging equipment (20) is enabled through recording of the public key of the back-end system (10) and identification information of the EV charging equipment (20).

4. The method according to any one of the preceding claims,
**characterized in that**
the identification information for the EV charging equipment (20) includes a serial number of the EV charging equipment (20).

5. The method according to any one of the preceding claims,
**characterized in that**
the configuration information for the EV charging equipment (20) include one or more among:
a public/private key pair for the EV charging equipment (20);
a public key of cloud storage means;
name of the EV charging equipment (20);
one or more configuration options for the EV charging equipment (20);
load management set-up for the EV charging equipment (20), and/or
one or more security features for the EV charging equipment (20).

6. The method according to any one of claims 1 to 4,
**characterized in that**
the configuration information for the EV charging equipment (20) include one or more among:
local network configuration parameters;
one or more access parameters;
a cloud management platform network address;
one or more certificates for the EV charging equipment (20), and/or
one or more Open Charge Point Protocol (OCPP) parameters for the EV charging equipment (20).

7. The method according to any one of the preceding claims,
**characterized in that**
the step of uploading the defined identification information and configuration information for the EV charging equipment (20)to the EV charging equipment (20) includes:
recording the defined identification information and configuration information in a manufacturing log file for the EV charging equipment (20).

8. The method according to any one of claims 1 to 6,
**characterized in that**
the step of uploading the defined identification information and configuration information for the EV charging equipment (20) to the EV charging equipment (20) includes:
providing an embeddable hardware means;
setting pre-configured identification information and configuration information for the EV charging equipment (20) in the embeddable hardware means, and
installing the embeddable hardware means into the EV charging equipment (20).

9. The method according to any one of the preceding claims,
**characterized in that**
the connection between the EV charging equipment (20) and the back-end system (10) is established through:
Wi-Fi connection;
Ethernet-based connection, or
connection based on 3G/4G/5G standards.

10. The method according to any one of the preceding claims,
**characterized in that**
the method further includes the step of defining network-level access data for the EV charging equipment (20).

11. The method according to claim 10,
**characterized in that**
the network-level access data include:
Wi-Fi network name, and/or
Wi-Fi network password, and/or
Access Point Name (APN) settings.

12. A system (100) configured and adapted to implement the method according to any one of claims 1 to 11, said system (100) at least comprising:
at least one back-end system (10), and
an EV charging equipment (20),
wherein the EV charging equipment (20) is configured and adapted to be operatively connected to the back-end system (10) through a network;
wherein the EV charging equipment (20) is **characterized by** predefined identification information and configuration information;
wherein the back-end system (10) is **characterized by** a predefined public key;
wherein the back-end system (10) includes storage means (12) for storing the defined identification information and configuration information for the EV charging equipment (20), and
wherein set-up information for the EV charging equipment (20) including the public key of the back-end system (10) is delivered from the back-end system (10) to the EV charging equipment (20) through an installation channel, said installation channel being at least temporarily established between the EV charging equipment (20) and the back- end system (10).

13. The system according to claim 12,
**characterized in that**
the installation channel is defined by an installation application running on a user's mobile device.

14. The system (100) according to claim 12 or 13,
**characterized in that**
the EV charging equipment (20) includes one or more a electric vehicle supply equipment (EVSE) (20).

15. The system (100) according to any of claims 12 to 14,
**characterized in that**
the system further includes:
an embeddable hardware means where pre-configured identification information and configuration information for the EV charging equipment (20) are set,
wherein the embeddable hardware means is configured and adapted to be embedded into the EV charging equipment (20).

16. The system (100) according to any one of claims 12 to 15,
**characterized in that**
the EV charging equipment (20) includes a connection means (22) for connection to the back-end system (10), said connection means (20.1) being configured and adapted for
Wi-Fi connection;
Ethernet-based connection, or
connection based on 3G/4G/5G standards.

17. The system (100) according to any one of claims 12 to 16,
**characterized in that**
the identification information for the EV charging equipment (20) includes a serial number of the EV charging equipment (20).
